# EUROPEAN PATENT SPECIFICATION

(11) **EP 3 354 486 B1**
(45) Date of publication and mention of the grant of the patent: **27.05.2020**
(21) Application number: 17210826.8
(22) Date of filing: 28.12.2017
(51) Int. Cl.: B60C 11/12, B60C 11/03

(54) **THREE-DIMENSIONAL TREAD KERFS OF VEHICLE TIRE**
DREIDIMENSIONALE LAUFFLÄCHENEINSCHNITTE VON FAHRZEUGREIFEN
ENTAILLES TRIDIMENSIONNELLES DE BANDE DE ROULEMENT DE PNEU DE VÉHICULE

(30) Priority: 25.01.2017 KR 20170011740
(43) Date of publication of application: 01.08.2018
(73) Proprietor: Hankook Tire Co., Ltd., Seoul 135-723 (KR)
(72) Inventor: Joo, Sang Tak, 34219 Daejeon (KR)
(74) Representative: Petraz, Gilberto Luigi

(56) References cited:
- EP-A1- 3 412 476
- JP-A- H0 994 829
- JP-A- H02 310 108
- KR-B1- 101 037 410
- US-A1- 2011 168 311

## Description

### BACKGROUND OF THE INVENTION

### 1. Field of the Invention

The present invention relates to three-dimensional tread kerfs of a tire, and more particularly, the invention relates to three-dimensional tread kerfs of a tire, the kerfs enabling enhancement of braking performance and drainage characteristics on a wet road while maintaining the functions of kerfs on a snowy road.

### 2. Description of the Related Art

Generally, a tire is one of the components that constitute a vehicle and is a component that directly contacts the road surface. Air inside a tire has a buffering effect like a spring and absorbs impacts generated due to the unevenness of the road surface, thereby further improving the riding comfort.

Such a tire comprises a tread, which is a rubber layer that contacts the road surface; sidewalls connected to the tread and constituting the lateral surfaces of the tire; beads connected to the sidewalls, the beads being fixed to a rim of a vehicle; a carcass mounted inside the tire, the carcass forming a framework of the tire and exhibiting high fatigue resistance to bending and stretching of the sidewalls; and a belt disposed between the tread and the carcass to protect the carcass and enhance the rigidity of the tread surface. The tread includes blocks and grooves, and kerfs(or sipe) are formed within the blocks so that the rigidity of the blocks is appropriately adjusted by the kerfs, and thus the requirements on the performance of the tire are satisfied.

Provision of kerfs on the tire surface has been helpful for enhancing the braking and driving performance on a snowy road; however, such provision of kerfs lowers the rigidity of tread blocks and causes deterioration of the handling performance on a dry road or a wet road. Therefore, as a measure for complementing the decrease in rigidity caused by the insertion of kerfs, three-dimensional kerfs have been developed.

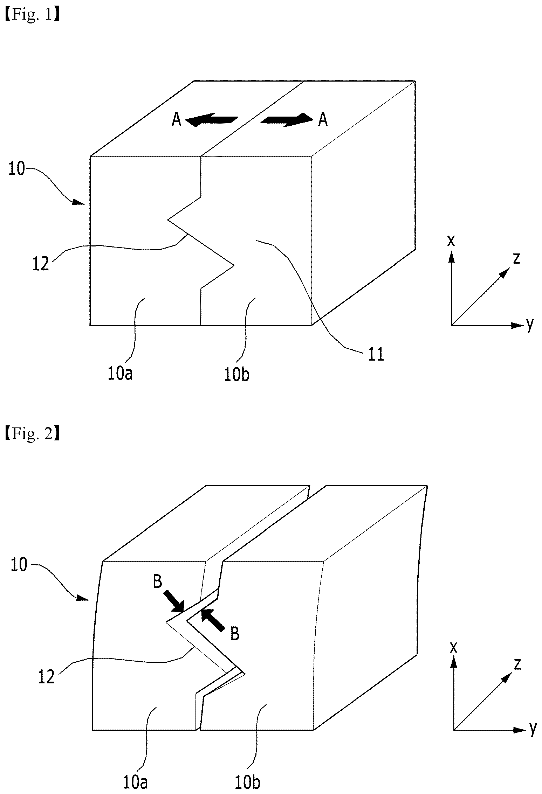

FIG. 1 is a schematic perspective view illustrating a block in which a conventional three-dimensional kerf has been formed. As illustrated in the diagram, a zigzag wave type three-dimensional kerf (12) is formed in the middle of the top face (11) of a block (10) along the depth direction (z direction) of the block (10), and this kerf divides the block (10) into sub-blocks (10a and 10b). In FIG. 1, when a force is exerted on the three-dimensional kerf (12) in the direction of arrow A during running of the tire, the block rigidity may vary due to the three-dimensional kerf (12) along the direction of tire movement as illustrated in FIG. 2. Thus, there is a problem that the effect of interlocking becomes small, and the locking force is concentrated on one or two sites (the interlocking force is indicated with arrow B).

Three-dimensional tread kerfs intended for addressing these problems are disclosed in Korean Unexamined Patent Application No. 2016-0022057 (date of publication: February 29, 2016), which has been filed and published by the applicant of the present invention. These kerfs are tread kerfs for a snow tire, and the kerfs enable securing of excellent tire performance (steering, braking and traction performance, and the like) on a snowy road or an icy road without deteriorating the tire performance on a dry road and a wet road, enable maintenance of uniform block rigidity irrespective of the directionality of the kerfs, can increase the interlocking effect, and enable maintenance of uniform traction performance can be maintained even during the later stage of wear of the tire.

Meanwhile, tread kerfs of a tire for heavy load is disclosed in Korean Registered Patent No. 10-1037410 (date of registration: May 20, 2011), which was filed by the applicant of the present invention, for the purpose of enhancing the braking function on a wet road as a result of enhancing the drainage characteristics while the durability function is strengthened by enhancing the heat generation performance.

A tread for a tire according to the preamble of Claim 1 is disclosed by US 2011/168311.

Tire treads to improve the drainage performance of a winter tire are also known from patent document KR 101037410 of the same applicant, and also from the laid open Japanese patent applications having publication nos. JP H09 94829 and JP H02 310108.

However, since the amount of snowfall in the winter has recently decreased due to the climate with abnormally high temperatures, it is necessary to further enhance the braking performance and drainage characteristics on a wet road while maintaining the functions of kerfs on the snow.

### SUMMARY OF THE INVENTION

The present invention was achieved as a result of such necessity as described above, and it is an object of the present invention to provide three-dimensional kerfs for a tire, which improve the braking performance and drainage characteristics on a wet road while maintaining the functions of the kerfs on the snow.

The object described above has been achieved by the present invention which provides a tread for a tire according to claim 1.

The width of the connecting gap is set to 0.4 to 2 mm, and the amplitude of the zigzag wave is set to 0 to 20 mm. The width (or diameter) of the water-absorbing columnar cavity is formed to be 1.2 times or more the width of the connecting gap.

The water-absorbing columnar cavity may be constructed into a columnar cavity having a circular cross-section, a columnar cavity having a polygonal cross-section, or a pipette-shaped columnar cavity.

The width (or diameter) of the flow channel is formed to be 1.2 times or more the width of the connecting gap. The flow channel may be constructed into a tube having a circular cross-section, a tube having a triangular cross-section, or a tube having a diamond-shaped cross-section. At the ends of the flow channel, an enlarged diameter section having a diameter that is larger than the diameter on the inner side of the flow channel, is formed. The flow channel is constructed to have a venturimeter shape.

When the three-dimensional tread kerfs for a tire according to the present invention are used, an effect of further improving the braking performance and drainage characteristics on a wet road while maintaining the functions of kerfs on the snow, may be obtained.

Specifically, the tread kerfs for a tire according to the invention have functions of maintaining the block rigidity, which may be deteriorated when kerfs are inserted into tread blocks, and maintaining the block rigidity that may increase with wear of the tire, at a certain level, and also have an effect of absorbing the water existing between the tire tread and the road surface when the tire runs on a wet road, thereby allowing the tire tread to be brought into direct contact with the road surface, and causing the absorbed water to be easily discharged through the lateral sides of the tread blocks.

### BRIEF DESCRIPTION OF THE DRAWINGS

FIG. 1 is a schematic perspective view illustrating a block having a conventional three-dimensional kerf formed therein.
FIG. 2 is an explanatory diagram illustrating the state in which the block illustrated in FIG. 1 is deformed by a force exerted during running of the tire, and the blocks are interlocked.
FIG. 3 is a configuration diagram illustrating a three-dimensional tread kerf for a tire according to a first embodiment of the present invention.
FIG. 4 is an explanatory diagram for explaining the amplitude of the zigzag wave illustrated in FIG. 2.
FIG. 5 is an explanatory diagram for explaining the size of the kerf illustrated in FIG. 2.
FIG. 6A to FIG. 6C are explanatory diagrams for explaining absorption and draining of water.
FIG. 7 is a configuration diagram illustrating a three-dimensional tread kerf for a tire according to a second embodiment of the present invention.
FIG. 8 is a configuration diagram illustrating a three-dimensional tread kerf for a tire according to a third embodiment of the present invention.
FIG. 9 is a configuration diagram illustrating a three-dimensional tread kerf for a tire according to a fourth embodiment of the present invention.
FIG. 10 is a diagram illustrating the flow channel of a three-dimensional tread kerf for a tire according to a fifth embodiment of the present invention.

### DETAILED DESCRIPTION OF THE PREFERRED EMBODIMENTS

Hereinafter, preferred embodiments of the present invention will be described in more detail with reference to the attached drawings. At this time, it should be noted that the same constituent elements are assigned with the same reference symbols as far as possible in the attached drawings. Furthermore, detailed explanations on known functions and configurations that may make the gist of the invention ambiguous will not be given here. For similar reasons, it should be noted that some constituent elements shown in the attached drawings are exaggerated, omitted, or schematically illustrated.

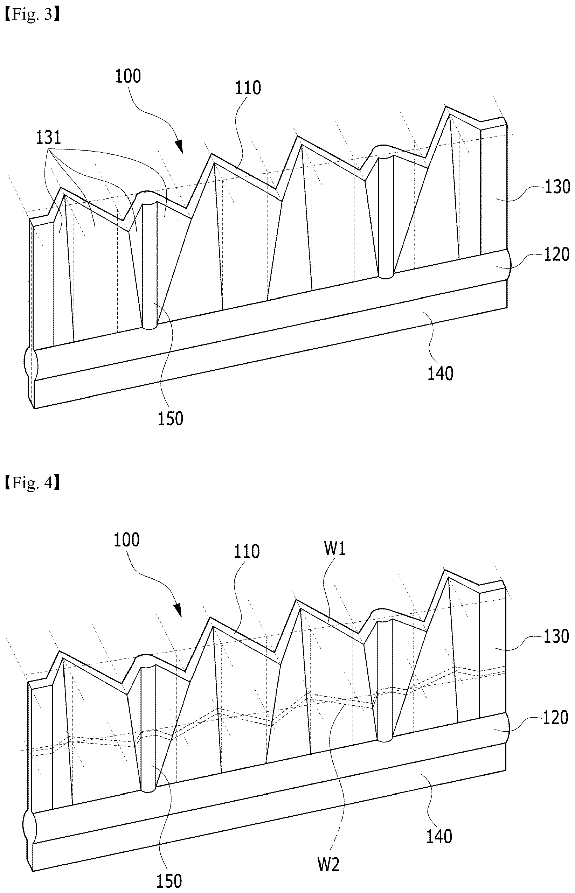

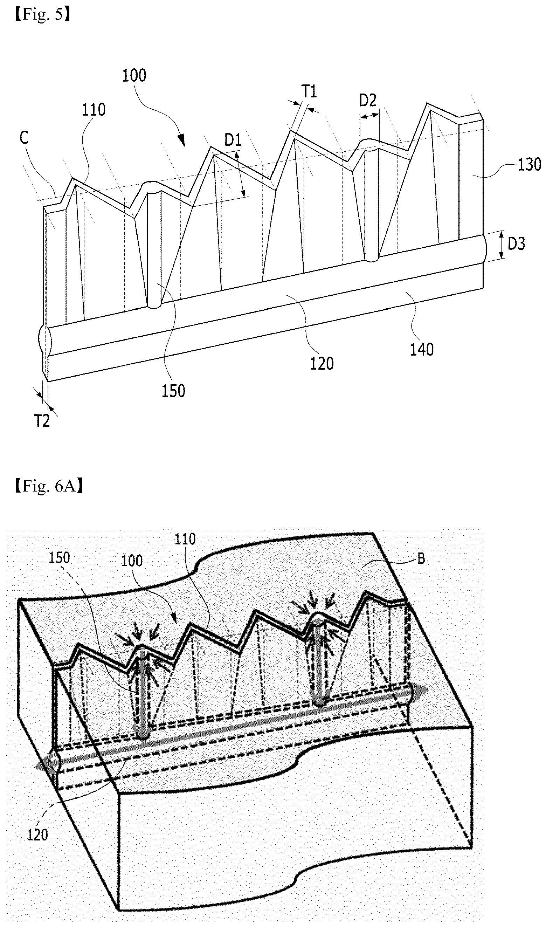

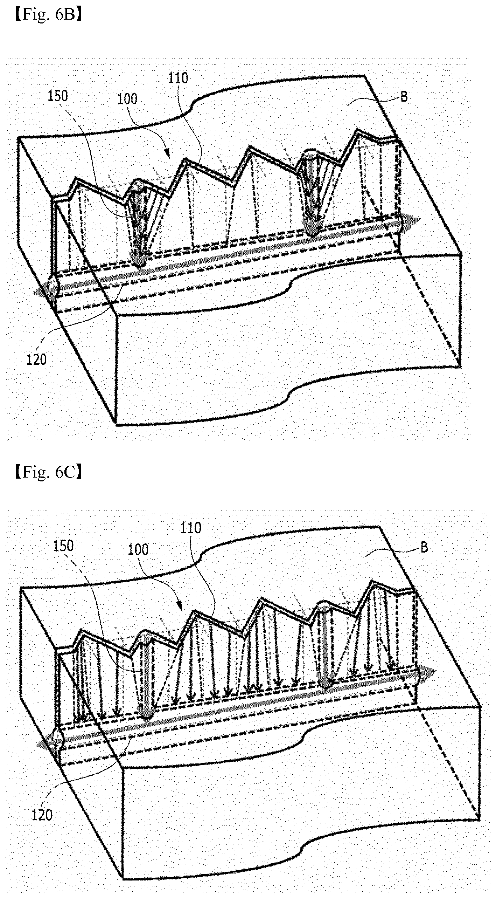

FIG. 3 is a configuration diagram illustrating a three-dimensional tread kerf for a tire according to a first embodiment of the present invention, FIG. 4 is an explanatory diagram for explaining the amplitude of the zigzag wave shown in FIG. 2, and FIG. 5 is an explanatory diagram for explaining the size of the kerf shown in FIG. 2. As illustrated in the diagrams, the tread kerf (100) according to the first embodiment of the present invention is formed in a block (B; illustrated in FIG. 6) of a tire tread, and the tread kerf includes a kerf opening (110), a flow channel (120), a connecting gap (130), and a kerf base (140).

The kerf opening (110) is formed so as to have a zigzag wave shape along the tire circumferential direction of a tread block, and the zigzag wave is formed along the connecting gap (13) such that the amplitude decreases downward along the depth direction of the tread block. FIG. 4 illustrates a state in which the amplitude of a zigzag wave (W2) formed in the middle of the depth of the connecting gap (130) is smaller than the amplitude of the zigzag wave (W1) of the kerf opening (110). It is preferable that the amplitude (D1) of the zigzag wave is adjusted to 0 to 20 mm.

The flow channel (120) is in a tubular form having a diameter that is wider than the width of the kerf opening (110). The flow channel (120) is formed as a cylindrical tube formed along the circumferential direction of the tire and plays a role as a drain duct, through which the water absorbed through the kerf opening (110) moves through the connecting gap (130) and a water-absorbing columnar cavity that will be described below and is drained horizontally. The flow channel (120) can maintain a rapid flow of air by means of a pressure difference, and thereby improves the heat generation performance as well as durability. The flow channel (120) can also maintain rapid drainage characteristics by means of a pressure difference. It is preferable that the width (or diameter, D3) of the flow channel (120) is formed to be 1.2 times or more the width (T1) of the connecting gap (130).

The connecting gap (130) is a gap that connects the kerf opening (110) and the flow channel (120). As the amplitude of the zigzag wave decreases downward along the depth direction of the tread block, the side faces (131) in the vertical direction are formed in a distorted state. It is preferable that the width (T1) of the connecting gap (130) is adjusted to 0.4 to 2 mm.

At some apexes of the zigzag wave of the connecting gap (130), water-absorbing columnar cavities (150) that have a diameter (D2) larger than the width (T1) of the connecting gap (130) and absorb water from the vicinity of the kerf at the tire surface, are formed. A water-absorbing columnar cavity (150) is formed in the vertical direction (depth direction of the tread block), and the apex at which the water-absorbing columnar cavity (150) is formed is located at a position on the center line (C) of the zigzag wave. It is preferable that the width (or diameter, D2) of the water-absorbing columnar cavity (150) is formed to be 1.2 times or more the width (T1) of the connecting gap (130). The water-absorbing columnar cavity (150) plays a role of absorbing water existing between the tire tread and the road surface when the tire runs on a wet road, and helping the tire tread to be in direct touch with the road surface.

The kerf base (140) is a kerf formed below the flow channel (120), and the formation of the kerf base (140) is optional. It is preferable that the width (T2) of the kerf base (140) is formed to be equal to or smaller than the width (T1) of the connecting gap (130).

A three-dimensional tread kerf (100) formed into such a shape has a function of maintaining the block rigidity that may deteriorate as kerfs are formed in the tread blocks (B), and also maintaining the block rigidity that may increase with wear of the tire, at a certain level.

FIG. 6A illustrates the process in which water is absorbed at the opening of the water-absorbing columnar cavity (150), flows through the water-absorbing columnar cavity (150) into the flow channel (120) along the depth direction of the tread block, and is drained through both ends in the horizontal direction of the flow channel (120). FIG. 6b illustrates the process in which water flows slantingly into the water-absorbing columnar cavity (150) from the vicinity of the water-absorbing columnar cavity (150) through the kerf opening (110), flows into the flow channel (120), and is drained through both ends in the horizontal direction of the flow channel (120). FIG. 6C illustrates the process in which water is absorbed at the opening of the water-absorbing columnar cavity (150), flows into the flow channel (120) through the water-absorbing columnar cavity (150) along the depth direction of the tread block, moves to the lower side in the vertical direction through the kerf opening (110) to flow into the flow channel (120), and is drained through both ends in the horizontal direction of the flow channel (120). Such operations proceed in a complex manner so that water on the tread surface is easily absorbed and discharged.

The water present on the surface of the tread block interrupts the contact between the tread rubber and the road surface and deteriorates the tire functions on a wet road; however, the tread kerfs of the present invention play a role of noticeably increasing the contact between tread blocks and the road surface, owing to the configuration in which water on the tread surface is absorbed into the water-absorbing columnar cavity and then is easily discharged through the lateral sides of the tread block.

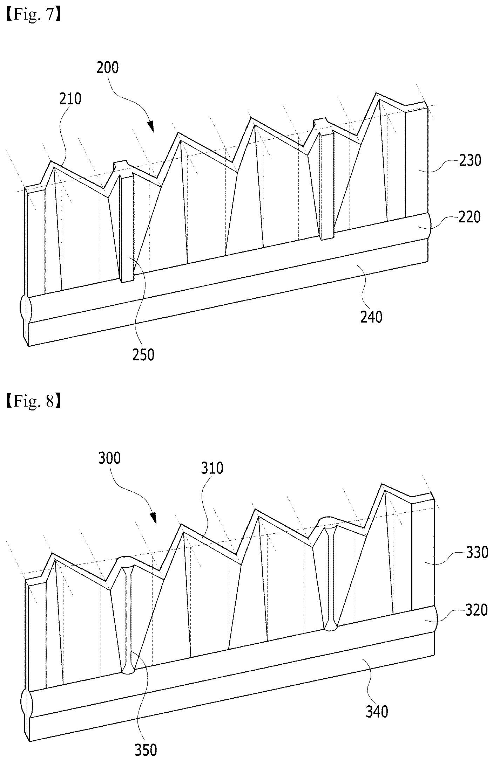

The three-dimensional tread kerfs for a tire according to the present invention can enhance the drainage performance by modifying the water-absorbing columnar cavities into various forms in consideration of the functions required from the tire. FIG. 7 is a configuration diagram illustrating a three-dimensional tread kerf (200) for a tire according to a second embodiment of the present invention, and the second embodiment is an embodiment including a rectangular water-absorbing columnar cavity (250) or a polygonal water-absorbing columnar cavity. The configurations of the kerf opening (210), the flow channel (220), the connecting gap (230), and the kerf base (240) of the second embodiment are identical or similar to those of the first embodiment, and therefore, any further detailed explanation will not be given here.

FIG. 8 is a configuration diagram illustrating a three-dimensional tread kerf for a tire according to a third embodiment of the present invention, and the third embodiment has a configuration including a water-absorbing columnar cavity (350) that is constructed into a pipette-shaped cavity. The pipette-shaped water-absorbing columnar cavity (350) of the third embodiment has an effect by which the water-absorbing columnar cavity (350) touches the ground (pressure is applied thereon) during the running of the tire, and when the pressure is released, the water-absorbing columnar cavity absorbs water as the volume of the cavity increases, thereby further facilitating the absorption of water. The configurations of the kerf opening (310), the flow channel (320), the connecting gap (330), and the kerf base (340) of the third embodiment are identical or similar to those of the first embodiment, and therefore, any further detailed explanation will not be given here.

Furthermore, the three-dimensional tread kerfs for a tire according to the present invention can enhance the drainage performance by modifying the flow channel into various forms in consideration of the functions required from the tire.

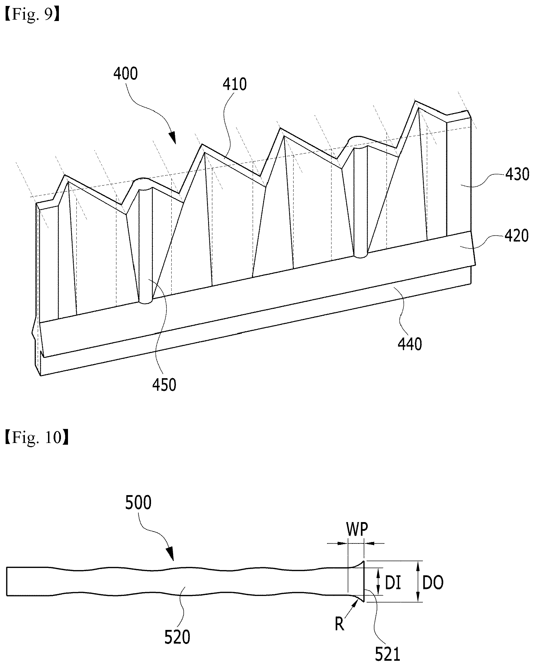

FIG. 9 is a configuration diagram illustrating a three-dimensional tread kerf (400) for a tire according to a fourth embodiment of the present invention. The fourth embodiment presents a flow channel (420) having a triangular cross-section, and a flow channel having a diamond-shaped cross-section may also be adopted. The configurations of the kerf opening (410), the connecting gap (430), the kerf base (440), and the water-absorbing columnar cavity (450) of the fourth embodiment are identical or similar to those of the first embodiment, and therefore, any further detailed explanation will not be given here.

FIG. 10 is a diagram illustrating the flow channel (520) of a three-dimensional tread kerf (500) for a tire according to a fifth embodiment of the present invention. In the fifth embodiment, an enlarged diameter section (521) having an outer diameter (DO) that is larger than the inner diameter (DI) of the flow channel (520) is formed at the ends of the flow channel (520). The flow channel (520) is constructed into a venturimeter shape. The enlarged diameter section is formed into a tapered tube shape. The outer diameter (DO) at the ends of the enlarged diameter section (521) is made larger by at least 20% or more than the inner diameter (DI) of the flow channel, and thus the enlarged diameter section is formed into a curved face having a topological difference. The enlarged diameter section (521) formed into a curved shape has an effect of reducing the generation of cracks that occur at corners. It is preferable that the outer diameter (DO) at the ends of the enlarged diameter section (521) is set to be larger by 20% or more than the inner diameter (DI) of the flow channel, and when a correlation between the drainage efficiency and the securing of rigidity of the tread blocks is considered, it is preferable that the enlargement is limited to a value of 100% or less.

The topological difference made by the diameter difference between the inner flow channel and the enlarged diameter section of the flow channel (520) plays a role of preventing, when cracks have been generated, the progress of the cracks toward the inner side. Furthermore, the enlarged diameter section (521) is such that as the diameter of the discharge section is made larger, the amount of discharge increases, and the drainage characteristics are improved.

It is preferable that the inner diameter (DI) of the flow channel (520) is formed to be 2 mm or larger, and it is preferable that the width (WP) of the enlarged diameter section, which is expressed as a distance from an end of the enlarged diameter section (521) to the inner diameter is 1 mm or larger. It is preferable that the radius ® of the outer curved surface of the enlarged diameter section is set to be 1 mm or larger.

Since the other configurations of the fifth embodiment (FIG. 10) are also identical or similar to the configurations of the first embodiment, further detailed explanation will not be given here.

Meanwhile, the embodiments of the present invention disclosed in the present specification and the attached drawings are only for illustrative purposes and suggest particular examples in order make the technical concepts of the present invention more easily understandable and to help understanding of the present invention, and the embodiments are not intended to limit the scope of the present invention.

### Reference Numerals

100, 200, 300, 400, 500: Tread kerfs
110: Kerf opening
120: Flow channel
130: Connecting gap
140: Kerf base
150: Water-absorbing columnar cavity
B: Tread block
D1: Amplitude of zigzag wave
D2: Width (or diameter) of water-absorbing columnar cavity
D3: Width (or diameter) of flow channel
T1: Width of connecting gap
T2: Width of kerf base
W1, W2: Zigzag wave

## Claims

1. Three-dimensional tread for a tire, the tread comprising:
a kerf (100, 200, 300, 400, 500) opening (110) formed in a block of a tire tread , and formed into a zigzag wave (W1, W2) shape along a tire circumferential direction in the tread block, and the zigzag wave (W1, W2) is formed such that an amplitude (D1) decreases downward along the depth direction of the block;
a tubular-shaped flow channel (120) formed in the lower part of the kerf (100, 200, 300, 400, 500) and having a width (D3) larger than the width of the kerf opening (110); and
a connecting gap (130) connecting the kerf opening (110) and the flow channel (120);
and, in some parts of the zigzag wave, a water-discharging columnar cavity (150) capable of discharging water from the vicinity of the kerf (100, 200, 300, 400, 500) at the tire surface is formed, and the water-discharging columnar cavity (150) has a width or diameter (D2) larger than the width (T1) of the connecting gap (130),
and in that the water-discharging columnar cavity (150) is formed in the depth direction of the tread block,
**characterised in that**
an apex of the zigzag wave at which the water-discharging columnar cavity (150) is formed is located at a position on a center line (C) of the zigzag wave (W1, W2).

2. The three-dimensional tread for a tire according to claim 1, wherein the width (T1) of the connecting gap (130) is 0.4 to 2 mm, and the amplitude (D1) of the zigzag wave (W1, W2) is more than 0 and less than 20mm.

3. The three-dimensional tread for a tire according to claim 1, wherein the width or diameter (D2) of the water-discharging columnar cavity (150) or the width or diameter (D3) of the flow channel (120) is formed to be 1.2 times or more the width (T1) of the connecting gap (130).

4. The three-dimensional tread for a tire according to claim 1, wherein the water-discharging columnar cavity (150) is constructed into a columnar cavity having a circular cross-section, a columnar cavity having a polygonal cross-section, or a pipette-shaped columnar cavity.

5. The three-dimensional tread for a tire according to claim 1, wherein the flow channel (120) is constructed into a tube having a circular cross-section, a tube having a triangular cross-section, or a tube having a diamond-shaped cross-section.

6. The three-dimensional tread for a tire according to claim 1, wherein an enlarged diameter section having a diameter larger than the inner diameter of the flow channel (120) is formed at the ends of the flow channel.

7. The three-dimensional tread for a tire according to claim 1, wherein the flow channel (120) is formed into a venturimeter shape.

## Patentansprüche

1. Dreidimensionale Lauffläche für einen Reifen, wobei die Lauffläche
einen Einschnitt (100, 200, 300, 400, 500) mit einer Öffnung (110), die in einem Block einer Reifenlauffläche ausgebildet und entlang einer Reifenumfangsrichtung in Gestalt einer zickzackartigen Welle (W1, W2) in dem Laufflächenblock ausgebildet ist, und wobei die zickzackartige Welle (W1, W2) derart ausgebildet ist, dass eine Amplitude (D1) in der Tiefenrichtung des Blockes nach unten abnimmt,
einen schlauchartig geformten Fließkanal (120), der in dem unteren Bereich des Einschnitts (100, 200, 300, 400, 500) ausgebildet ist und eine Breite (D3) aufweist, die größer als die Breite der Einschnittsöffnung (110) ist, und
einen Verbindungsspalt (130), der die Einschnittsöffnung (110) und den Fließkanal (120) verbindet, aufweist,
und wobei in einigen Bereichen der zickzackartigen Welle ein Wasser abführender Säulenhohlraum (150), der dazu eingerichtet ist, Wasser aus dem Bereich des Einschnitts (100, 200, 300, 400, 500) an der Reifenoberfläche abzuführen, ausgebildet ist, und wobei der Wasser abführende Säulenhohlraum (150) eine Breite oder einen Durchmesser (D2) aufweist, der größer als die Breite (T1) des Verbindungsspalts (130) ist,
und wobei der Wasser abführende Säulenhohlraum (150) in der Tiefenrichtung des Laufflächenblocks ausgebildet ist, **dadurch gekennzeichnet, dass** ein Scheitel der zickzackartigen Welle, an dem der Wasser abführende Säulenhohlraum (150) ausgebildet ist, an einer Stelle auf einer Mittellinie (C) der zickzackartigen Welle (W1, W2) ausgebildet ist.

2. Dreidimensionale Lauffläche für einen Reifen nach Anspruch 1, wobei die Breite (T1) des Verbindungsspalts (130) zwischen 0,4 und 2 mm beträgt und wobei die Amplitude (D1) der zickzackartigen Welle (W1, W2) mehr als 0 und kleiner als 20 mm ist.

3. Dreidimensionale Lauffläche für einen Reifen nach Anspruch 1, wobei die Breite oder der Durchmesser (D2) des Wasser abführenden Säulenhohlraums (150) oder die Breite oder der Durchmesser (D3) des Fließkanals (120) so ausgestaltet ist, dass sie beziehungsweise er das 1,2-fache oder mehr als die Breite (T1) des Verbindungsspalts (130) ist.

4. Dreidimensionale Lauffläche für einen Reifen nach Anspruch 1, wobei der Wasser abführende Säulenhohlraum (150) als ein Säulenhohlraum mit einem kreisförmigen Querschnitt, als ein Säulenhohlraum mit einem mehreckigen Querschnitt oder als ein pipettenartig ausgebildeter Säulenhohlraum ausgelegt ist.

5. Dreidimensionale Lauffläche für einen Reifen nach Anspruch 1, wobei der Fließkanal (120) als eine Röhre mit einem kreisartigen Querschnitt, als eine Röhre mit einem dreieckigen Querschnitt oder als eine Röhre mit einem diamantartig ausgebildeten Querschnitt ausgelegt ist.

6. Dreidimensionale Lauffläche für einen Reifen nach Anspruch 1, wobei ein vergrößerter Durchmesserabschnitt mit einem Durchmesser größer als der Innendurchmesser des Fließkanals (120) an den Enden des Fließkanals ausgebildet ist.

7. Dreidimensionale Lauffläche für einen Reifen nach Anspruch 1, wobei der Fließkanal (120) nach Art eines Venturimessers ausgebildet ist.

## Revendications

1. Bande de roulement tridimensionnelle pour un pneumatique, la bande de roulement comprenant :
une ouverture (110) de rainure (100, 200, 300, 400, 500) formée dans un bloc d'une bande de roulement de pneumatique, et formée en une forme d'onde en zigzag (W1, W2) le long d'une direction circonférentielle du pneumatique dans le bloc de bande de roulement, et l'onde en zigzag (W1, W2) est formée de telle sorte qu'une amplitude (D1) diminue vers le bas le long de la direction de profondeur du bloc ;
un canal d'écoulement de forme tubulaire (120) formé dans la partie inférieure de la rainure (100, 200, 300, 400, 500) et ayant une largeur (D3) supérieure à la largeur de l'ouverture de rainure (110) ; et
un espace de connexion (130) connectant l'ouverture de rainure (110) et le canal d'écoulement (120) ;
et, dans certaines parties de l'onde en zizag, une cavité colonnaire d'évacuation d'eau (150) capable d'évacuer de l'eau à partir du voisinage de la rainure (100, 200, 300, 400, 500) est formée au niveau de la surface pneumatique, et la cavité colonnaire d'évacuation d'eau (150) a une largeur ou un diamètre (D2) supérieur(e) à la largeur (T1) de l'espace de connexion (130),
et en ce que la cavité colonnaire d'évacuation d'eau (150) est formée dans la direction de profondeur du bloc de bande de roulement,
**caractérisé en ce que**
un sommet de l'onde en zigzag, au niveau duquel la cavité colonnaire d'évacuation d'eau (150) est formée, est situé au niveau d'une position sur une ligne centrale (C) de l'onde en zigzag (W1, W2).

2. Bande de roulement tridimensionnelle pour un pneumatique selon la revendication 1, dans laquelle la largeur (T1) de l'espace de connexion (130) est de 0,4 à 2 mm, et l'amplitude (D1) de l'onde en zigzag (W1, W2) est supérieure à 0 et inférieure à 20 mm.

3. Bande de roulement tridimensionnelle pour un pneumatique selon la revendication 1, dans laquelle la largeur ou le diamètre (D2) de la cavité colonnaire d'évacuation d'eau (150) ou la largeur ou le diamètre (D3) du canal d'écoulement (120) est formé(e) pour être égal(e) ou supérieur(e) à 1,2 fois la largeur (T1) de l'espace de connexion (130).

4. Bande de roulement tridimensionnelle pour un pneumatique selon la revendication 1, dans laquelle la cavité colonnaire d'évacuation d'eau (150) est construite en une cavité colonnaire ayant une section transversale circulaire, une cavité colonnaire ayant une section transversale polygonale, ou une cavité colonnaire en forme de pipette.

5. Bande de roulement tridimensionnelle pour un pneumatique selon la revendication 1, dans laquelle le canal d'écoulement (120) est construit en un tube ayant une section transversale circulaire, un tube ayant une section transversale triangulaire, ou un tube ayant une section transversale en forme de losange.

6. Bande de roulement tridimensionnelle pour un pneumatique selon la revendication 1, dans laquelle une section de diamètre agrandi ayant un diamètre supérieur au diamètre intérieur du canal d'écoulement (120) est formée aux extrémités du canal d'écoulement.

7. Bande de roulement tridimensionnelle pour un pneumatique selon la revendication 1, dans laquelle le canal d'écoulement (120) est formé en forme de venturimètre.
